# EUROPEAN PATENT APPLICATION

(11) **EP 1 705 416 A1**
(43) Date of publication of application: **27.09.2006**
(21) Application number: 05425170.7
(22) Date of filing: 24.03.2005
(51) Int. Cl.: F16L 33/207, F16L 13/14, F16L 13/00

(54) **Joint for systems, for example a thermo-sanitary system**

(71) Applicant: Tiemme Raccorderie S.p.A., 25045 Castegnato (Brescia) (IT)
(72) Inventor: Veronesi, Franco c/o Tiemme Raccorderie S.P.A., 25045 Castegnato (Brescia) (IT)
(74) Representative: Crippa, Paolo Ernesto

(57) **Abstract**

The present invention relates to a joint (1) for a system, for example a water-sanitary system, or in water, wine, oil, fuel and like processing systems, comprising an insert (10) and a deformable bush (50). The insert (10) comprises an annular shoulder (24) with which the end edge (2b) of the pipe (2) is only partly in contact, in order to prevent contact between the metal core (6) of the pipe (2) and the insert (10), to prevent galvanic corrosion phenomena.

## Description

. The present invention relates to a joint associable to a seat of a body to obtain a mechanical and fluid connection between said body and a pipe. In particular, the joint according to the present invention is intended to be used in thermo-sanitary systems, or in wine, water, oil, fuel, general fluid processing systems, or in pneumatic systems.

. In particular, the object of the present invention is a "push" joint, that is, a joint associable to a pipe through an action performed on a bush of said joint that realises a permanent deformation of said bush.

. Several solutions are known for system joints.

. Some of these solutions are disclosed, for example, in documents JP-H02-256992, DE19545361, DE19727642, DE19603228, EP-A1-1015804 and DE G 9116948.

. A joint known in the art comprises an insert and a bush coupled to said insert, provided with a bulge along the outer surface, adapted for obtaining an abutment for a tool adapted for the bush deformation. Along the edge coupled with the insert, the bush exhibits two opposed deformable tongues between which inspection openings are obtained. Moreover, the known joint comprises a ring that can be fitted on the corrugated portion of the insert. When the pipe is fitted on the corrugated insert portion, the ring arranges between the pipe end and the insert shoulder, in order to prevent the onset of galvanic corrosion phenomena between the pipe and the insert.

**.** A joint obtained according to the above description is disclosed for example in document DE 10062141.

. The object of the present invention is to realise a joint adapted for connecting a pipe to the seat of a body capable of meeting the requirements of the field, while solving the disadvantages of the prior art.

. Such object is achieved by a joint obtained according to claim 1. The dependent claims describe embodiment variants.

. The features and advantages of the joint according to the present invention will appear more clearly from the following description of an embodiment, made by way of an indicative non-limiting example with reference to the annexed drawings, wherein:

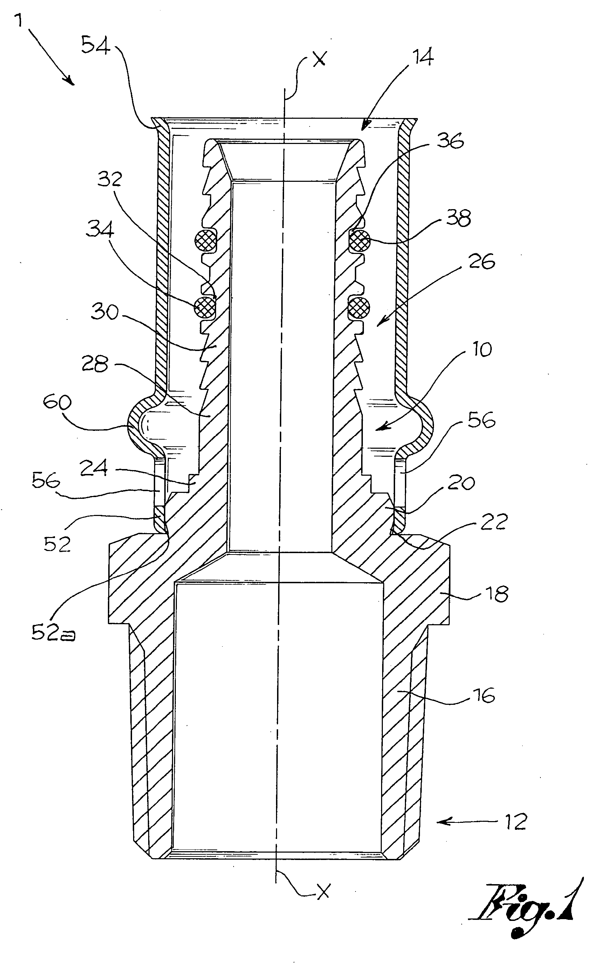

. - figure 1 shows a section view of a joint according to one embodiment;

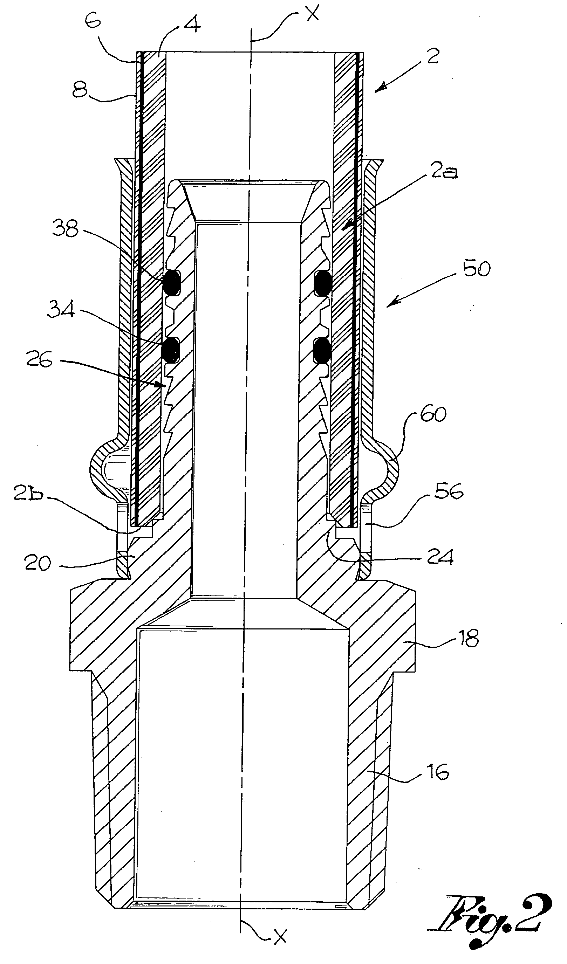

. - figure 2 shows the joint of figure 1 associated to a pipe, in a non-deformed configuration of the pipe;

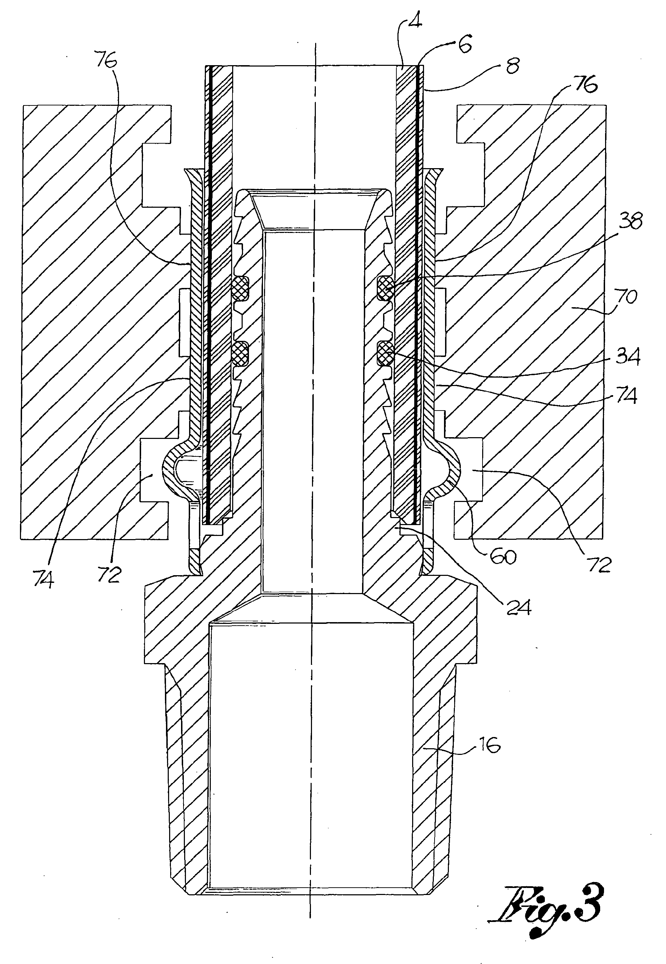

. - figure 3 shows the joint and the pipe of figure 2 associated to a tool;

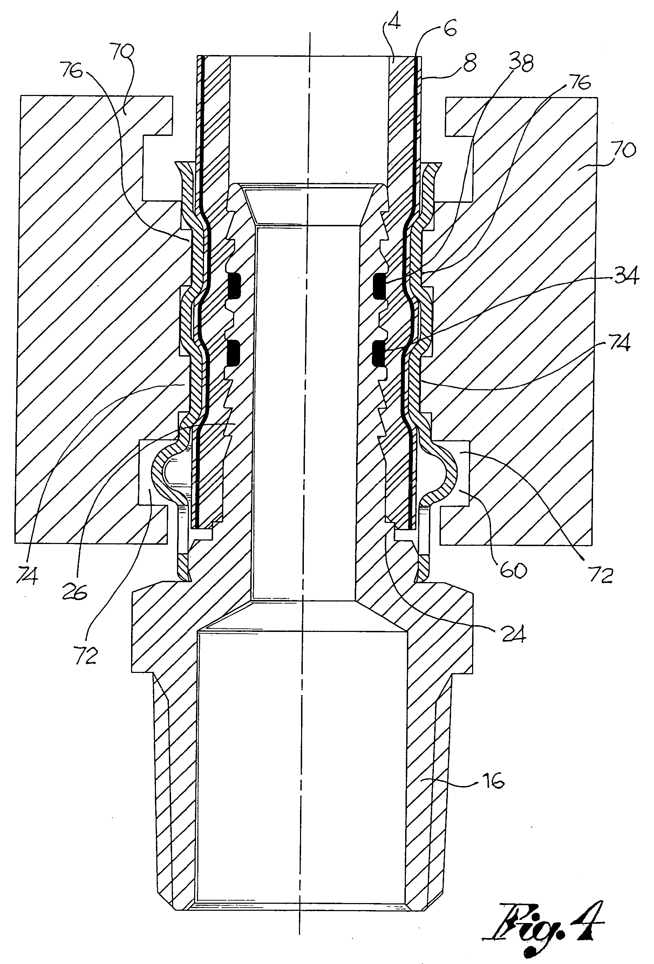

. - figure 4 shows the pipe, the joint and the tool of figure 3 in a deformed configuration of the joint;

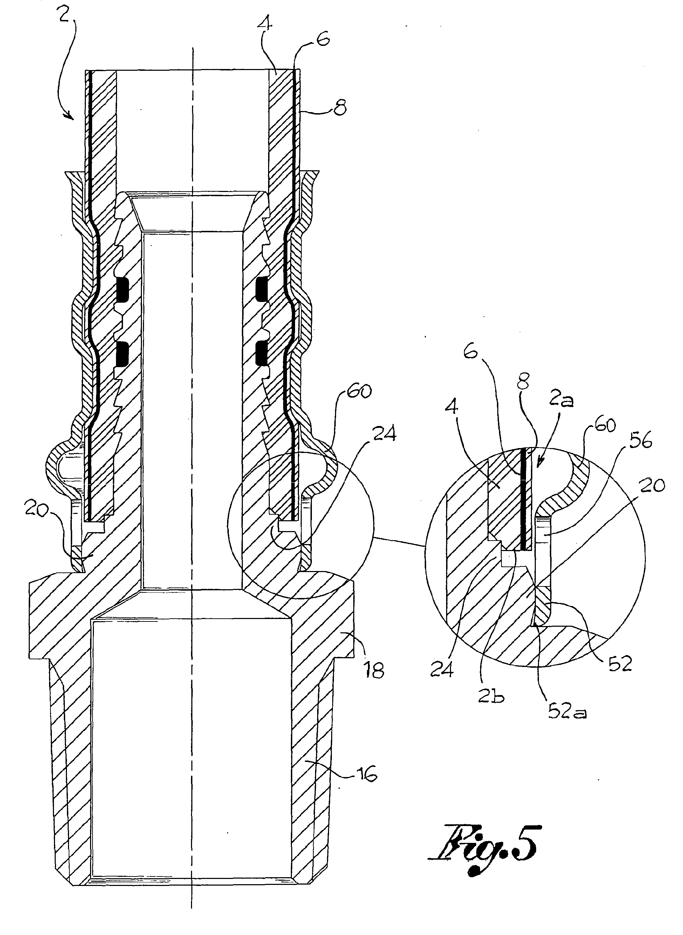

. - figure 5 shows the pipe and the joint of figure 2 in a deformed configuration of the joint and, at a side, an enlargement of a detail of such joint;

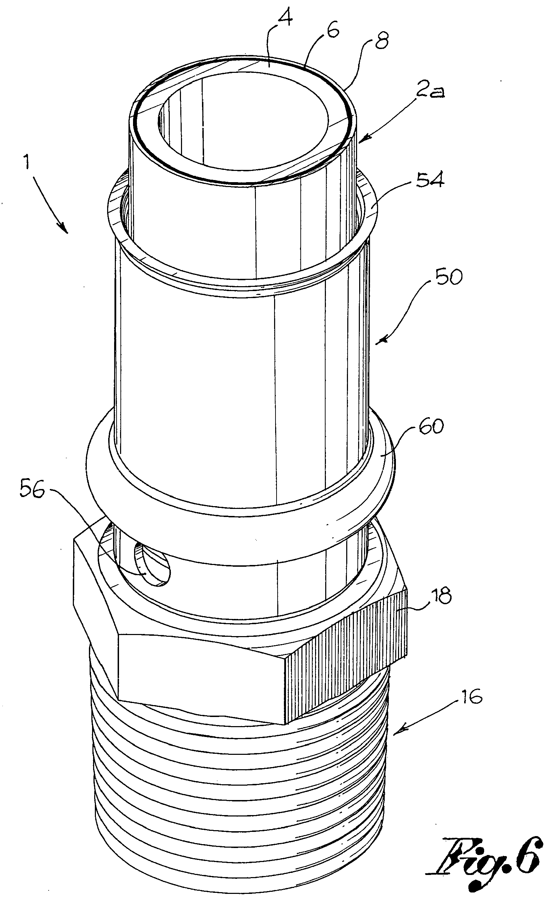

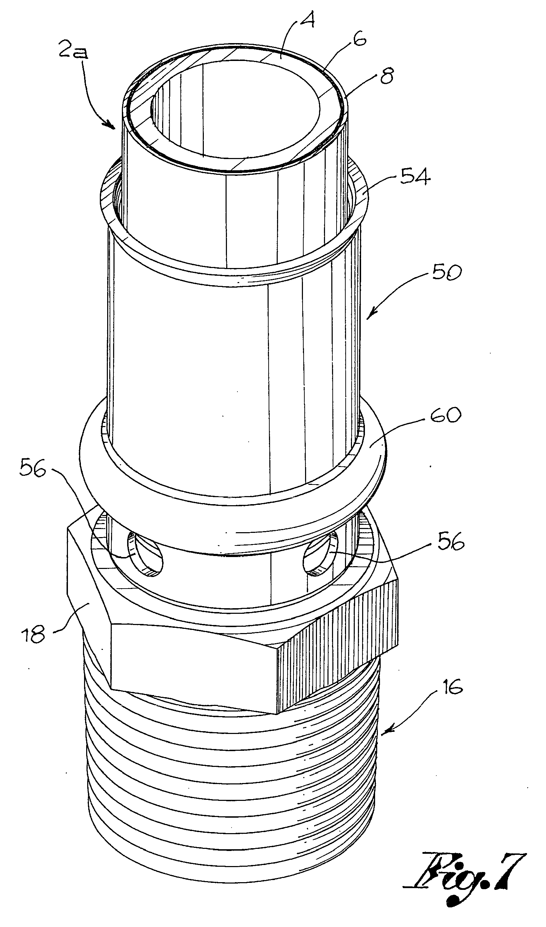

. - figures 6 and 7 show a three-dimensional view of the joint obtained according with further embodiments;

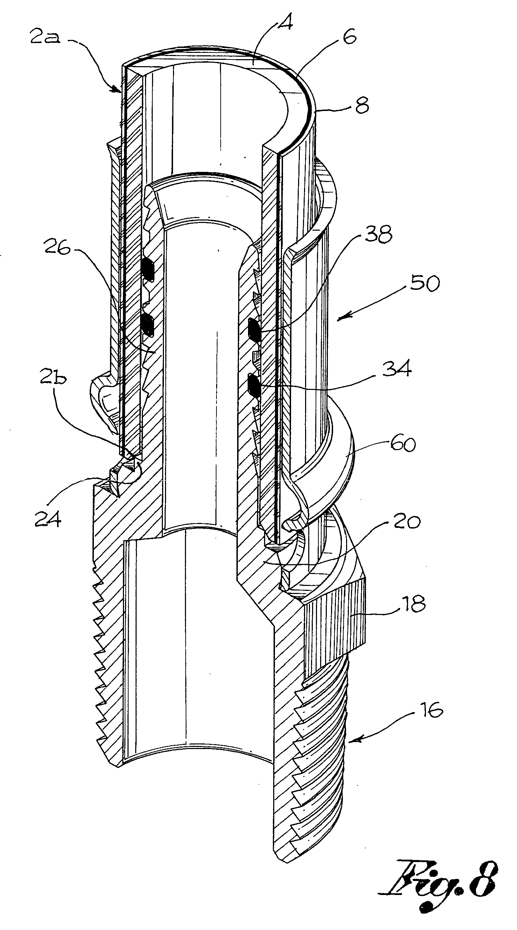

. - figure 8 shows a section view of the embodiments of figures 6 and 7;

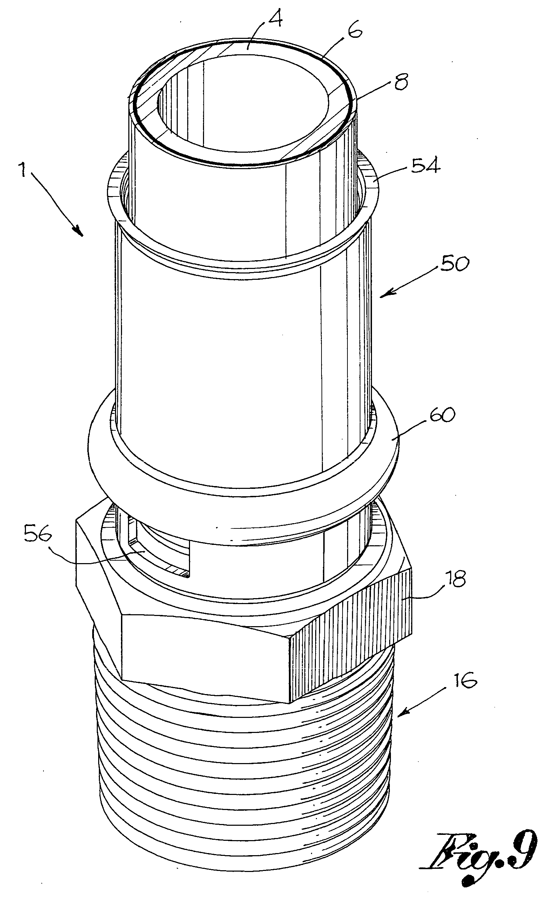

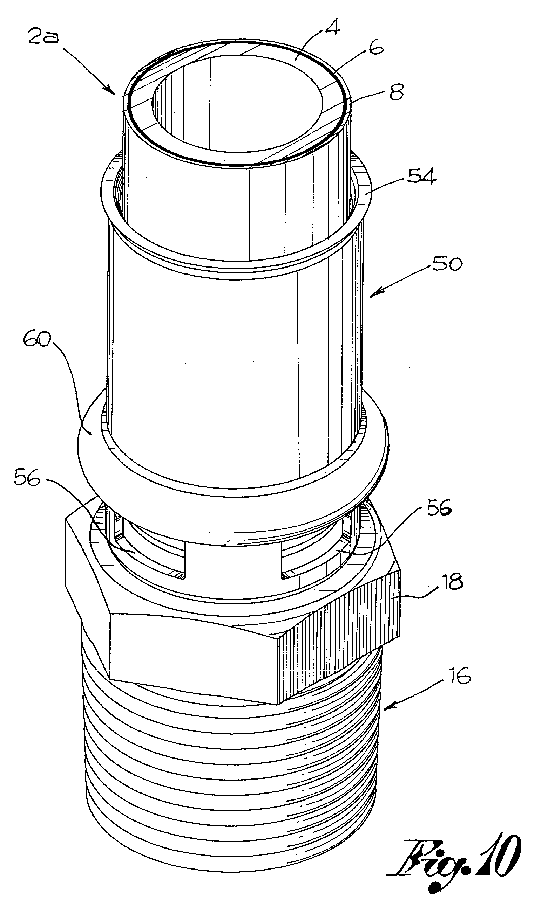

. - figures 9 and 10 show a three-dimensional view of the joint obtained according with further embodiments, and

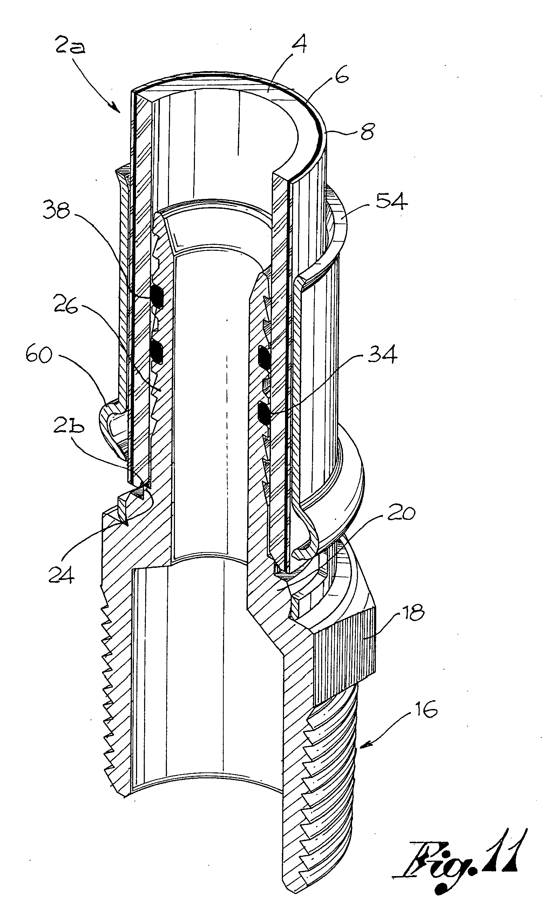

. - figure 11 shows a section view of the embodiments of figures 9 and 10.

. With reference to the attached figures, reference numeral 1 globally indicates a joint for a system, for example a thermo-sanitary system, for processing fluids such as oil, water, fuel, wine and the like, or a pneumatic system, adapted for the connection between a seat of a body (not shown) and a pipe 2.

. Pipe 2 comprises an end portion 2a adapted for being associated to said joint 1. Said end portion 2a ends with an end edge 2b.

. According to an embodiment, pipe 2 comprises an inner sheath 4, a core 6, overlapped to the inner sheath 4 and generally made of a metal material, and an outer sheath 8, overlapped to core 6.

. Joint 1 comprises a hollow insert 10 inside which the system fluid flows.

**.** Said insert 10 extends along an insert axis X-X, between a proximal end 12, intended for the connection to the body, and a distal end 14, opposed to said proximal end.

. From the proximal end 12 towards the distal end 14, insert 10 comprises a connecting portion 16, for example threaded, adapted, for example, for being screwed in the body seat to obtain the connection between the joint and the body.

. The connecting portion 16 is jointed to a gripping portion 18 adapted for being coupled to a fitting tool, for example an adjustable wrench or pliers, to connect the insert to the body.

. Preferably, said gripping portion 18 exhibits a hexagonal shape.

**.** The gripping portion 18 is jointed to an annular hooking portion 20, preferably comprising an annular groove 22. Preferably, said annular groove is obtained at the joint between the gripping portion 18 and said hooking portion 20.

**.** The hooking portion 20 is jointed to an annular shoulder 24, generally having smaller diameter than the diameter of said annular projection.

. According to a preferred embodiment, said annular shoulder 24 exhibits a smaller outer diameter than the outer diameter of the inner sheath 4 of pipe 2 associable to the joint.

. The annular shoulder 24 is jointed to an elongated portion 26, at least partly corrugated, adapted for being inserted into the end portion 2a of pipe 2.

. Said corrugated portion 26 comprises a cylindrical corrugated portion 28 jointed to the annular shoulder 24. Moreover, said corrugated portion 26 comprises a notched portion 30, jointed to said cylindrical annular portion 28 and extending up to said distal end of joint 1.

. Said notched portion 30 comprises a plurality of teeth, preferably with flattened tip.

. Preferably, moreover, said corrugated portion 26 exhibits at least one seat for housing a sealing ring.

. Preferably, said corrugated seat 26 exhibits a proximal seat 32, for seating a respective sealing ring 34, and a distal seat 36, for seating a further sealing ring 38. Said distal seat is closer to said distal end 14 than joint 1 relative to said proximal seat 32.

. Joint 1 further comprises a bush 50 extending along said joint axis X-X, between a cooperation end 52, ending in an annular edge 52a bent towards said axis X-X, and a free end 54.

. At said cooperation end 52, said bush exhibits at least one inspection opening 56, preferably spaced relative to said annular edge 52a.

. Preferably, said openings 56 have a circular shape. According to a further embodiment, said openings have a rectangular shape, preferably with rounded edges.

. Moreover, said bush 50 comprises an annular projection 60 adapted for realising an abutment for a tool intended for the connection between the pipe and the joint.

. Said annular projection 60 is preferably obtained through a deformation of the wall of said bush. In other words, said projection 60 exhibits thickness substantially equal to the thickness of the remaining portion of the bush.

. For the assembly of joint 1, bush 50 is fitted on the corrugated portion 26 of insert 10, so that the cooperation end 52 covers the annular projection 20 and abuts against the gripping portion 18.

. In particular, the annular edge 52a is bent on said annular projection 20, thus being seated in said annular groove 22.

. After assembly, the inspection openings 56 face said annular shoulder 24.

. Moreover, after assembly, the free end 54 of bush 50 extends beyond said distal end 14 of insert 10.

. In other words, the corrugated portion 26 of insert 10 is fully covered by bush 50.

. To assemble the joint on the body, the connecting portion 16 of insert 10 is screwed in the seat of said body, for example using a fitting tool adapted for gripping the gripping portion 18.

. For the assembly of pipe 2 to joint 1, the end portion 2a of pipe 2 is inserted on the corrugated portion 26 of insert 10 up to moving the end edge 2b of said pipe 2 in abutment against the annular shoulder 24 of insert 10 (figure 2) .

**.** In said configuration, the sealing rings 34, 38 are influenced and deformed by the end portion 2a of pipe 2, in particular by the inner sheath 4 of said pipe.

. Moreover, the inspection openings 56, that face said annular shoulder 24, are arranged in position adapted for allowing an inspection of the cooperation between pipe and shoulder, in particular they are adapted for checking that between the end 2a of the pipe it is in contact with the annular shoulder 24.

. In particular, the outer diameter of the annular shoulder 24 is such as to come into contact only with the inner sheath 4 of pipe 2. Advantageously, this allows keeping core 6 of pipe 2 separate from insert 10 and, in particular, separate also from the annular shoulder 24.

. To complete the assembly, it is necessary to suitably deform bush 50 to obtain the mechanical connection between end 2a of pipe 2 and the joint (figure 3) .

. To carry out such deformation, a tool 70 is generally used, comprising two jaws between which bush 50 is grasped.

. In particular, said tool 70 comprises, at the surface facing the bush, a seat 72 adapted for seating the annular projection 60 of bush 50, a proximal active portion 74 and a distal active portion 76. Said active portions influence said bush 50 for the deformation.

. In particular, when the annular projection 60 is seated into seat 72 of tool 70, said active portions 74, 76 are correctly positioned on the bush for obtaining the desired deformation thereof. In other words, said annular projection 60 realises an example of embodiment of positioning means adapted for obtaining a reference for said tool 70, so as to correctly position said active portions 74, 76.

. In particular, the proximal active portion 74 arranges so as to only partly overlap the proximal seat 32 containing the sealing ring 34. Moreover, the distal active portion 76 arranges so as to only partly overlap the distal seat 36 containing the sealing ring 38.

. Afterwards, tool 70 is worked to obtain the deformation of bush 50 (figure 4).

. Said deformation allows compressing the end portion 2a of pipe 2 between the deformed bush 50 and the corrugated portion 26, thus obtaining the connection between said pipe and said insert.

. Innovatively, the joint according to the present invention allows decreasing the production costs while preventing the occurrence of galvanic corrosion phenomena between the pipe and the insert.

. According to a further advantageous aspect, the joint described above allows inspecting the coupling between the pipe and the insert before proceeding to the deformation of the bush, in particular checking the existence of an abutment between the end of the pipe and the insert.

. According to an even further advantageous aspect, the joint according to the present invention allows correct positioning of the deforming tool relative to the bush for the bush deformation in the desired portions.

. According to a further advantageous aspect, the joint allows an easy inspection to check the contact of the pipe with the insert along the entire end edge of said pipe.

**.** Advantageously, moreover, the joint according to the present invention allows easy and effective connection of the bush with the insert.

. According to an even further advantageous aspect, the joint according to the present invention allows obtaining a very effective seal with the contact between the inner sheath and the insert.

. It is clear that a man skilled in the art may make several changes and adjustments to the joint described above in order to meet specific and incidental needs, all falling within the scope of protection defined in the following claims.

## Claims

1. Joint (1) for a system, adapted for being inserted into a seat of a body for obtaining a fluid and mechanical connection between said body and a pipe (2), wherein said pipe (2) comprises an end portion (2a) ending with an end edge (2b),
wherein said joint comprises:
- a hollow insert (10) extending along an insert axis (X-X), said insert being adapted for being connected to said body, wherein said insert (10) comprises an elongated portion (26) adapted for being inserted into said end portion (2a) of the pipe (2);
- a bush (50) associable to said insert, in an assembly configuration of the pipe to the joint, said end portion (2a) of the pipe (2) being comprised between said bush (50) and said elongated portion (26) of the insert (10);
said joint being **characterised in that** said elongated portion (26) is jointed to an annular shoulder (24), in said assembly configuration of the pipe to the joint, said end edge (2b) of the pipe (2) being only partly in contact with said annular shoulder (24) and the remaining portion of said end edge (2b) being spaced from said insert (10).

2. Joint according to claim 1, wherein said pipe is of the type comprising an inner sheath (4) and a core (6) overlapped to said sheath (4), wherein said annular shoulder (24) exhibits an outer diameter of the wall in contact with the end edge (2b) of the pipe which is smaller than the outer diameter of said inner sheath (4) of the pipe.

3. Joint according to claim 2, wherein said core (6) is made of a metal material and the end edge (2b) corresponding to said core (6) is spaced from said insert.

4. Joint according to any one of the previous claims, wherein said bush (50) is deformable for obtaining the connection between the pipe and the joint.

5. Joint according to any one of the previous claims, wherein said bush (50) comprises an annular edge (52a) in abutment with said insert (10).

6. Joint according to claim 5, wherein said annular edge (52a) is seated into an annular groove (22) of an annular hooking portion (20) of said insert (10).

7. Joint according to claim 6, wherein said annular shoulder (24) is jointed to said annular hooking portion (20).

8. Joint according to any one of the previous claims, wherein said bush comprises at least one inspection opening (56) through which said annular shoulder(24) is visible.

9. Joint according to claim 8, wherein said openings (56) are spaced from the annular edge (52a) of the bush (50).

10. Joint according to claim 8 or 9, wherein at least one of said openings (56) exhibits a circular shape.

11. Joint according to any one of claims from 8 to 10, wherein at least one of said openings (56) exhibits a rectangular shape.

12. Joint according to claim 11, wherein said rectangular openings (56) exhibit rounded edges.

13. Joint according to any one of claims from 8 to 12, wherein said openings (56) are opposed.

14. Joint according to any one of the previous claims, wherein said bush (50) comprises an annular projection (60) adapted for realising a reference for a fitting tool adapted for deforming the bush.

15. Joint according to claim 14, wherein said annular projection (60) of the bush (50) exhibits thickness substantially equal to the thickness of the remaining portion of bush.

16. Joint according to any one of the previous claims, wherein said elongated portion (26) is at least partly corrugated.

17. Joint according to any one of the previous claims, wherein said elongated portion (26) comprises at least one seat for a sealing ring.

18. Joint according to claim 17, wherein said elongated portion comprises a proximal seat (32) for a sealing ring (34) and a distal seat (36) for a sealing ring (38).

19. Joint according to claim 17 or 18, wherein said bush (50) comprises an annular projection (60) adapted for realising a reference for a fitting tool (70), said projection (60) being axially arranged so that at least one active portion (74,76) of said tool (70) axially overlaps only partly said seat (32,36) for a sealing ring (34, 38) .

20. Joint according to any one of the previous claims, wherein said insert comprises a gripping projection (18) adapted for being gripped by a fitting tool for the installation on said body.

21. Joint according to claim 20, wherein said gripping portion (18) exhibits a hexagonal shape.

22. Joint according to any one of the previous claims, wherein said insert (10) comprises a threaded connecting portion (16) for the connection to said body.
